# EUROPEAN PATENT APPLICATION

(11) **EP 4 105 011 A1**
(43) Date of publication of application: **21.12.2022**
(21) Application number: 21753989.9
(22) Date of filing: 27.01.2021
(51) Int. Cl.: B29K 105/12, B32B 27/04, B29C 48/08, B29C 48/21, B29C 48/49

(54) **METHOD FOR MANUFACTURING FIBER-CONTAINING SHEET, AND FIBER-CONTAINING SHEET**

(30) Priority: 13.02.2020 JP 2020022080
(71) Applicant: Hitachi Zosen Corporation, Osaka-shi, Osaka 559-8559 (JP)
(72) Inventor: FUJIOKA, Shuji, Osaka-shi, Osaka 559-8559 (JP); OZAKI, Shuji, Osaka-shi, Osaka 559-8559 (JP); SUZUKAWA, Masahiro, Osaka-shi, Osaka 559-8559 (JP)
(74) Representative: Grünecker Patent- und Rechtsanwälte PartG mbB
(86) International application number: PCT/JP2021/002732
(87) International publication number: WO 2021/161782

(57) **Abstract**

A method for manufacturing a fiber-containing sheet. In extruding resin into sheet form using a T-die, the extrusion from the T-die is performed with a first resin for forming a core layer and a second resin for forming both skin layers on both sides of the core layer laminated together. The first resin contains fiber material and the second resin does not contain fiber material.

## Description

### Technical Field

The present invention relates to a method for manufacturing a fiber-containing sheet and a fiber-containing sheet.

### Background Art

When plastic composite materials containing fiber materials such as carbon fiber and glass fiber in resin are molded, the fibers may become oriented along the flow direction (MD) of the molded product. The occurrence of this orientation is particularly characteristic of sheet extrusion using a T-die. The orientation along the MD causes the molded sheet to have improved strength in the direction along MD. The technology for forming such plastic composites containing fiber material using a T-die is described, for example, in JPH08-269210A.

### Summary of Invention

### Technical Problem

However, sheets formed by this method and oriented along the MD have high strength in the direction along the MD as described above, but have low strength in the direction perpendicular to the MD (TD), and low strength in the direction perpendicular to the MD (TD).

As a countermeasure, multiple sheets oriented along MD are stacked at different angles to each other and integrated by heat press processing to obtain a sheet with strength in all directions. However, such a method requires special techniques for this purpose, forming time for this purpose, and costs for this purpose.

The purpose of the present invention is to solve these problems so that fiber-containing sheets with suppressed orientation can be obtained easily and reliably.

### Solution to Problem

In order to achieve this purpose, the method for manufacturing a fiber-containing sheet of the present invention is based on the following method: In extruding resin into a sheet form using a T-die, performing the extrusion from the T-die with a first resin for forming a core layer and a second resin for forming both skin layers on both sides of the core layer laminated together, wherein the first resin contains fiber material and the second resin does not contain fiber material.

In detail, this invention was made based on the knowledge that the cause of fiber orientation in composite materials containing fibers in resin is that when the resin and fibers in a molten state flow through the T-die in a mixed state and are finally stretched into a sheet in the T-die, the fibers are oriented in the direction along the MD due to the resistance of the channel surface. According to the present invention, in extrusion molding using a T-die, skin layers are placed on both sides of the core layer, the core layer is molded with resin containing fiber material, and both skin layers are molded with resin not containing fiber material. The resin containing fiber material in the core layer is extruded from the T-die so that it does not contact the surfaces of the flow channel of the T-die, and thus the resin is formed into a sheet with reduced fiber orientation.

According to the method for manufacturing the fiber-containing sheet of the present invention, it is suitable to mold the first resin of the core layer and the second resin of both skin layers together in a peelable state. In this way, the skin layer can be peeled off from the core layer after molding to obtain a sheet with fiber-containing resin with suppressed orientation exposed on the surface.

According to the method for manufacturing the fiber-containing sheet of the present invention, in order to achieve good separation of the first resin for the core layer from the second resin for both skin layers, it is suitable to use the first and second resins that are incompatible with each other.

According to the method for manufacturing the fiber-containing sheet of the present invention, by peeling off at least one of the skin layers from the molded body obtained in an integrally laminated state, it is easy to obtain a sheet in which the fiber-containing resin whose orientation is suppressed exposes on the surface of the sheet.

According to the method for manufacturing the fiber-containing sheet of the present invention, it is also suitable to mold the first resin of the core layer and the second resin of both skin layers in one piece in a state where they cannot be peeled off from each other. In this way, a fiber-containing sheet with suppressed orientation can be easily obtained without conducting a peeling process.

According to the method for manufacturing the fiber-containing sheet of the present invention, it is also suitable to use resins that are compatible with each other as the first resin for forming the core layer and the second resin for forming both skin layers. In this way, the first resin for the core layer and the second resin for both skin layers can be easily molded together in a manner that they cannot be peeled off from each other.

The fiber-containing sheet according to the present invention comprises a core layer made of a first resin containing fiber material and skin layers made of a second resin not containing fiber material and disposed on both sides of the core layer. The skin layer is peelable to the core layer.

Other fiber-containing sheet according to the present invention comprises a first resin core layer containing fiber material and second resin skin layers, and the first resin core layer and second resin skin layers are molded in one piece, in which the second resin skin layers are disposed on both sides of this core layer and does not contain fiber material.

### Advantageous Effects of the Invention

According to the present invention, it is possible to easily and reliably obtain a fiber-containing sheet in which orientation is suppressed.

### Brief Description of the Drawings

Fig. 1 shows the cross-sectional structure of an essential part of a fiber-containing sheet of an embodiment of the present invention,
Fig. 2 shows an example of a configuration of a T-die that can be used in the embodiment of the method of manufacturing a fiber-containing sheet of the present invention, and
Fig. 3 is a figure that shows in contrast an enlarged image of the surface of the core layer in Example 2 and an enlarged image of the surface of the molded body in Comparative Example 1.

### Description of Embodiments

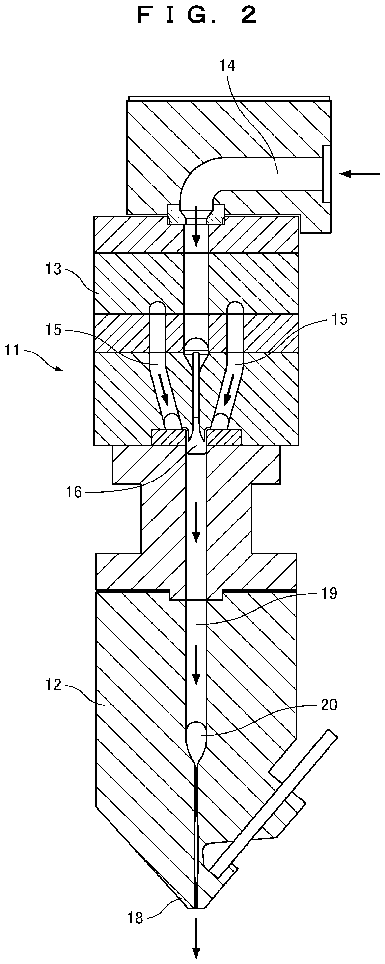

The detailed structure of a T-die shown in Figure 2 will be described. In the T-die 11 shown in in Figure 2, a die 12 and a feed block 13 are joined to each other to form a single unit.

The feed block 13 has a first path 14 that supplies a fiber-containing resin material in a molten state for the core layer, and a pair of second paths 15 and 15 that supply another molten resin material for the skin layer. At the confluence 16, the molten state resin materials from the respective paths 14, 15, and 15 are merged. A first molten state fiber-containing resin material for the skin layer from the second paths 15 and 15 is fed to both sides of a second molten state fiber-containing resin material for the core layer from the first path 14. As a result, these molten state resin materials are fed to the die 12 in three layers.

The die 12 has a narrow nozzle 18, which is formed long and narrow in the direction perpendicular to the plane of Figure 2. The resin is extruded from the die 12 in a sheet form to obtain a sheet-shaped molded body. Reference numeral 19 denotes a guideway for the resin sent from the feed block 13. Reference numeral 20 denotes a manifold. The manifold 20 widens the flow path for the molten state resin material from the guideway 19 in a direction perpendicular to the plane of Figure 2, thereby allowing to supply a sufficient amount of resin to the long nozzle 18 in a direction perpendicular to the plane of Figure 2.

In the T-die 11 shown in Figure 2, the resin material is spread once in front of the confluence 16 in a direction perpendicular to the plane of Figure 2 (e.g., width 100 mm). After being stacked at the confluence 16, the material is spread again in the manifold 20 of the die 12. After stacking at the confluence 16, the material is spread again at the manifold 20 of die 1 2. This configuration prevents the core layer from contacting the surfaces of the flow path for the resin material in a thinly formed state. As a result, in addition to the orientation suppression effect described below, orientation can be further suppressed.

In the manufacturing method of the present invention, the T-die 11 is not limited to the above configuration, and any configuration can be used as long as it is capable of extruding a sheet with a laminated structure in which skin layers are arranged on both sides of the core layer.

For example, although not shown in Fig. 2, instead of the above-mentioned two-step spreading type of molding shown in Fig. 2, the manufacturing method of the present invention can also be implemented with a T-die in which the resin material is spread to the product width in the first path 14 and the second paths 15 and 15, respectively, and then laminated. In this case, it is recommended that the confluence of the resin materials after widening is provided immediately after the manifold 20. When the method of the present invention is implemented using such a T-die, the sheet can be produced with precisely controlled thickness, although the orientation of the sheet is somewhat inferior.

According to the present invention, using the T-die 11 in the configuration shown in Figure 2, the fiber-containing resin material in a molten state for the core layer is fed into the first path 14 of the feed block 13 from outside the system, and the molten resin material for the skin layer is fed into the pair of second paths 15 of the feed block 13 from outside the system. These resin materials are then extruded from the nozzles 18 of the T-die 11 in the form of sheets in a laminated state, as described above.

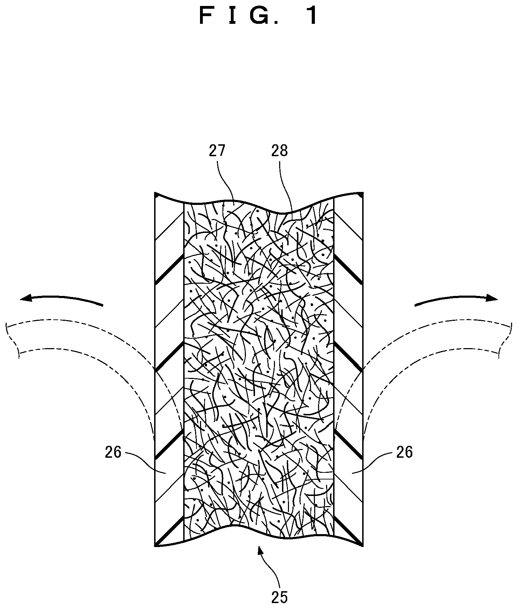

Figure 1 shows a cross-sectional structure of an essential part of the sheet-like molded body formed by an extrusion of the resin from the T-die 11 and subsequent cooling and solidification of the resin. Reference numeral 25 denotes a core layer. Skin layers 26 and 26 are formed in contact with both sides of the core layer 25, respectively.

The core layer 25 is composed of fiber material 28 in resin 27. In contrast, the skin layers 26 and 26 are composed of no fiber material in the resin.

Any thermoplastic resin can be suitably used as the resin forming the core layer 25, as long as it can be extruded from the T-die 11 in a molten state. For example, polyolefins such as polyethylene and polypropylene, polyamide, polyester, polycarbonate, polystyrene, polylactic acid, polyvinyl chloride, liquid crystal polymer, polyphenylene sulfide, poly(ether-etherketone), and polyetherimide can be used. Fiber material 28 is added primarily to reinforce resin 27, and any fiber material can be suitably used as long as it can achieve that purpose. For example, carbon fiber, glass fiber, boron fiber, high-strength resin fiber, cellulose fiber, etc. can be mentioned.

As mentioned above, the skin layers 26, 26 are formed in contact with both sides of the core layer 25, respectively. The resins comprising the skin layers 26, 26 can be resins that are incompatible with the resins comprising the core layer 25 or resins that are compatible with the resins comprising the core layer 25. When the resin comprising the skin layers 26, 26 is a resin that is incompatible with the resin comprising the core layer 25, as shown by the virtual line in Fig. 1, the molded body can be composed of only the core layer 25 by peeling off the skin layers 26, 26 from the surface of the produced sheet-like molded body. In contrast, when the resin comprising the skin layers 26, 26 is a resin that is compatible with the resin comprising the core layer 25, as shown by the solid line in Fig. 1, the core layer 25 and the skin layers 26, 26 can be made into a molded body with the core layer 25 and the skin layers 26, 26 integrated in a non-peelable manner.

An example of a combination of compatible resins is, for example, when the resin comprising the core layer 25 and the resins comprising the skin layers 26, 26 are the same type of resin, such as both being polypropylene. The combination of incompatible resins is, for example, a case where the resin comprising the core layer 25 is polypropylene and the resins comprising the skin layers 26, 26 are high-density polyethylene. Another example is such that resin comprising the core layer 25 is polypropylene and the resin comprising the skin layers 26, 26 is polycarbonate.

When molding the molding body shown in Fig. 1, the resin comprising the core layer 25 is sandwiched between the resins comprising the skin layers 26, 26 in the T-die 11 shown in Figure 2, and then the resin comprising the core layer 25 is extruded from this T-die 11. The resin comprising the core layer 25 and the resin comprising the skin layers 26, 26 are then extruded from the T-die 11. Therefore, the resins comprising the skin layers 26, 26 come in contact with the surfaces of the resin channels in the T-die 11. The resin comprising the core layer 25 is extruded from the T-die 11 without coming in contact with the surfaces of the resin channel in the T-die 11. Therefore, the resin comprising the core layer 25 is not subject to the resistance of the surfaces of the resin channel. And therefore, the core layer 25 as a molding body can be formed with orientation of the fiber material 28 on the surface of the core layer 25 and in its vicinity suppressed.

The skin layers 26 and 26 prevent the resin comprising the core layer 25 from contacting the surfaces of the resin channel when the resin flows along the resin channel in the T-die 11 in a molten state. Therefore, it is sufficient that the skin layers 26, 26 have the minimum thickness necessary to fulfill their function. For example, the skin layer 26 is effective if it is at least 10 µm thick. However, there is a problem that interlayer turbulence (flow marks) occurs between 10 and 50 µm and that the orientation of the fiber material 28 is not controlled. Therefore, a skin layer thickness of 50 µm or more is recommended. The total thickness of the core layer 25 and the pair of skin layers 26, 26 can be set appropriately according to the application of the molded product.

As described above, it is sufficient that the skin layers 26, 26 prevent the resin comprising the core layer 25 from contacting the surfaces of the resin channel when the resin flows along the resin channel in the T-die 11 in a molten state. Therefore, in principle, the skin layers 26, 26 should not contain fiber material, but as long as it is possible to prevent the fiber material from being oriented in the core layer 25. However, as long as the orientation of the fiber material in the core layer 25 can be prevented, it is acceptable if the skin layers 26, 26 contain some fiber material. In the present invention, the fact that skin layers 26 and 26 do not contain fiber material in the resin means that they broadly include up to such cases.

### Examples

In the following examples and comparative examples, each physical property was measured as follows.

### (1) Degree of orientation

The molten resin discharged from two extruders (Hitachi Zosen: HMT57, SHT65), one for the core layer and the other for the skin layer, was laminated in a feed block (Hitachi Zosen: FB 3), and then laminated in a T-die (Hitachi Zosen: TFS102F), and then stretched to a width of 1020 mm in a T-die (Hitachi Zosen: TFS102F), and then formed into sheets using a sheet forming machine (Hitachi Zosen: GOMP120.3). The sheet was formed by being compressed between rolls of the sheet forming machine and then solidified. The formed sheet was cut to 1 m in length, and a 30 mm square piece was cut from the formed sheet. The surface of the 30 mm square piece was examined under an optical microscope (Keyence: VHX-900) to visually observed the orientation.

### (2) Peelability of core layer and skin layer

The peelability was checked by making a cut in a part of the skin layer with a sharp blade such as a cutter knife, and then the skin layer on one side and the skin layer on the other side, where the cut was made to trigger the peeling, were manually grabbed. The peelability was then inspected by manually pulling both of the skin layers in different directions to peel them off.

### (Example 1)

Polypropylene resin containing 30 mass% carbon fiber (product name and number: Pyrophil PP-C-30, manufactured by Mitsubishi Chemical) was used as the material for the core layer. Polypropylene resin (product number: EA-9, manufactured by Nippon Polypro) was used as the material for both skin layers. Then, using a T-die with the structure shown in Figure 2, an extrusion molded sheet of 0.7 mm in thickness and 1002 mm in width were produced by the extrusion molding method. The ratio of the thickness of both skin layers to the core layer was skin layer:core layer:skin layer = 1:6:1.

The resulting molded body had the core layer and skin layer firmly integrated, and the two could not be peeled off by the method described above. Microscopic observation of the surface of the core layer from the surface of the skin layer showed that there was no noticeable directionality in the orientation of the carbon fibers, and it could be said that the carbon fibers were randomly oriented.

Table 1 shows the manufacturing conditions and measurement results of the physical properties of Example 1.

**[Table 1]**

| | Skin layer material | Core layer material | sheet-like molded body | | Ratio of thickness of layers | Orientation | Peelability |
|---|---|---|---|---|---|---|---|
| | | | Thickness (mm) | Width (mm) | | | |
| Example 1 | PP | PP+CF30 | 0.7 | 1002 | 1:6:1 | random | nonpeelable |
| Example 2 | PP | PP+CF30 | 0.7 | 980 | 1:2:1 | random | nonpeelable |
| Example 3 | PP | PP+CF30 | 1.0 | 1010 | 1:6:1 | random | nonpeelable |
| Example 4 | PP | PP+CF30 | 1.0 | 1030 | 1:12:1 | random | nonpeelable |
| Example 5 | HDPE | PP+CF30 | 1.0 | 1090 | 1:12:1 | random | peelable |
| Example 6 | PP+HDPE (2:1) | PP+CF30 | 1.0 | 1045 | 1:6:1 | random | nonpeelable |
| Example 7 | PC | PP+CF30 | 1.0 | 985 | 1:6:1 | random | peelable |
| Comparative Example 1 | - | PP+CF30 | 0.7 | 932 | Single layer | Strongly oriented | - |

| | | | | | | | |
|---|---|---|---|---|---|---|---|
| PP: Polypropylene HDPE: high-density polyethylene PC: polycarbonate PP+CF30: polypropylene containing 30 mass% carbon fiber | | | | | | | |

### (Examples 2-4)

Compared to Example 1, the manufacturing conditions were changed as shown in Table 1. Other conditions were the same as in Example 1.

The manufacturing conditions and measurement results of physical properties for Examples 2-4 are shown in Table 1.

### (Example 5)

Compared to Example 4, the material used to construct the skin layer was changed to high-density polyethylene (product number: HF3-13, manufactured by Nippon Polypro), which is incompatible with the resin used to construct the core layer. The rest of the process was the same as in Example 4.

The manufacturing conditions and measurement results of physical properties for Example 5 are shown in Table 1.

### (Example 6)

Compared to Example 3, the materials used to construct the skin layer were changed as follows. In detail, a material blended with the above-mentioned polypropylene and above-mentioned high-density polyethylene in a mass ratio of polypropylene: high-density polyethylene = 2:1 was used as the material to constitute the skin layer. The rest of the process was the same as in Example 3.

The manufacturing conditions and measurement results of physical properties for Example 6 are shown in Table 1.

### (Example 7)

Compared to Example 3, the material used to compose the skin layer was changed to polycarbonate resin (product number: E-2000, manufactured by Mitsubishi Engineering-Plastics) was used to construct the skin layer. The rest of the process was the same as in Example 3.

The manufacturing conditions and measurement results of physical properties for Example 7 are shown in Table 1.

### (Comparative Example 1)

A sheet-like molded body without a skin layer was obtained using only the materials used to construct the core layer in Example 1.

The manufacturing conditions and measurement results of physical properties for Comparative Example 1 are shown in Table 1.

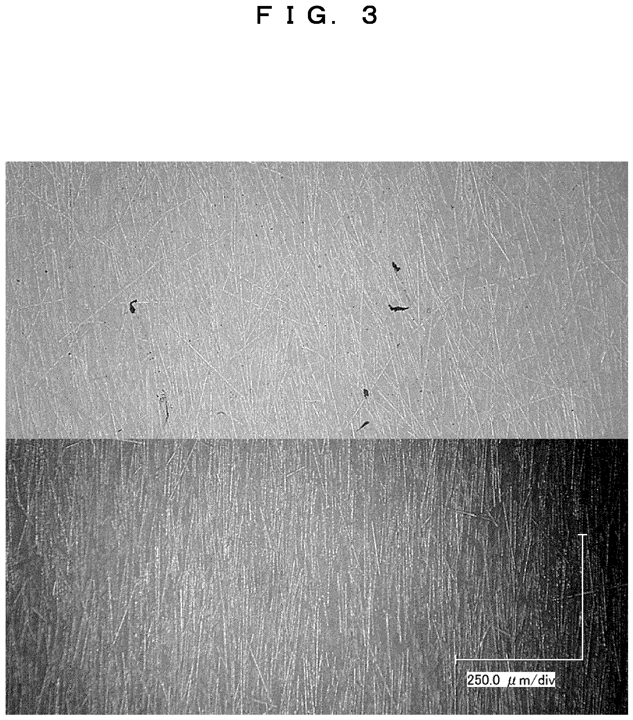

As shown in Table 1, in all of the sheet-like molded bodies of Examples 1 through 7, no noticeable directionality was observed in the orientation of the carbon fibers, and the carbon fibers were randomly oriented. In contrast, in Comparative Example 1, the carbon fibers in the resin in the molded body were strongly oriented in the direction along the MD, because the body was molded without the material used to constitute the skin layer. Figure 3 shows enlarged images of the surface of the core layer of Example 2 and the surface of the core layer of Comparative Example 1. The upper side of the figure shows the image of Example 2 and the lower side shows the image of Comparative Example 1. From the images, it can be seen that the carbon fibers in Comparative Example 1 have an obvious directionality, whereas in Example 2, the carbon fibers are randomly oriented without any noticeable directionality.

In Examples 1-4 and 6, the material used to construct the core layer and the material used to construct the skin layer were of the same type and compatible with each other, so that the skin layer and the core layer were tightly integrated. On the other hand, in Examples 5 and 7, the materials for the core layer and the material for the skin layer were different and incompatible with each other, so the skin layer could be easily peeled from the core layer after molding. As a result, it was possible to construct a sheet-like molded body only by the material containing fiber material in the resin.

## Claims

1. A method for manufacturing fiber-containing sheet comprising;
in extruding resin into sheet form using a T-die, performing the extrusion from the T-die with a first resin for forming a core layer and a second resin for forming both skin layers on both sides of the core layer laminated together,
wherein the first resin contains fiber material and the second resin does not contain fiber material.

2. The method for manufacturing a fiber-containing sheet according to claim 1, comprising forming the first resin of the core layer and the second resin of both skin layers together in one piece in a peelable state.

3. The method for manufacturing a fiber-containing sheet according to claim 2, comprising using resins incompatible with each other as the first resin for forming the core layer and the second resin for forming both skin layers.

4. The method for manufacturing a fiber-containing sheet according to claim 2, comprising peeling at least one skin layer off from the molded body obtained in an integrally laminated state.

5. The method for manufacturing a fiber-containing sheet according to claim 1, comprising forming the first resin of the core layer and the second resin of both skin layers together in one piece in a nonpeelable state.

6. The method for producing a fiber-containing sheet according to claim 5, comprising using resins compatible with each other as the first resin for forming the core layer and the second resin for forming both skin layers.

7. A fiber-containing sheet comprising;
a core layer made of a first resin containing fiber material, and
a skin layer disposed on both sides of the core layer and made of a second resin not containing fiber material,
wherein the skin layer is peelable with respect to the core layer.

8. A fiber-containing sheet comprising;
a core layer made of a first resin containing fiber material, and
a skin layer disposed on both sides of the core layer and made of a second resin not containing fiber material,
wherein the core layer and skin layer are formed in one piece.
